(19) Europäisches Patentamt
European Patent Office
Office européen des brevets

(11) Veröffentlichungsnummer: **0 275 007**
**A2**

(12) **EUROPÄISCHE PATENTANMELDUNG**

(21) Anmeldenummer: **88100027.7**

(51) Int. Cl.[4]: **C08G 75/04**

(22) Anmeldetag: **05.01.88**

(30) Priorität: **16.01.87 DE 3701068**

(43) Veröffentlichungstag der Anmeldung: **20.07.88 Patentblatt 88/29**

(84) Benannte Vertragsstaaten: **BE DE FR GB IT**

(71) Anmelder: **BAYER AG**
**D-5090 Leverkusen 1, Bayerwerk(DE)**

(72) Erfinder: **Glock, Volker, Dr.**
**Buschstrasse 167**
**D-4150 Krefeld(DE)**
Erfinder: **Ebert, Wolfgang, Dr.**
**Doerperhofstrasse 31**
**D-4150 Krefeld(DE)**
Erfinder: **Meyer, Rolf-Volker, Dr.**
**Buchheimer Strasse 23**
**D-4150 Krefeld(DE)**

(54) **Verfahren zur Herstellung von hochmolekularen, gegebenenfalls verzweigten Polyarylensulfiden.**

(57) Die Erfindung betrifft ein Verfahren zur Herstellung von hochmolekularem, gegebenenfalls verzweigten Polyarylensulfiden aus Alkalisulfiden, gegebenenfalls im Gemisch mit Alkalihydrogensulfiden und Dihalogenaromaten in einem polaren Lösungsmittel, in Gegenwart von 0,1 bis 6,0 Mol-%, bevorzugt 0,25 bis 4,0 Mol-% einer aromatischen Monoalkoxy-bzw. Monoalkylthioverbindung. Die so erhaltenen Polyarylensulfide haben reproduzierbar einstellbare Schmelzviskositäten bzw. Molmassen und zeichnen sich durch eine geringere Korrosion aus.

EP 0 275 007 A2

Xerox Copy Centre

## Verfahren zur Herstellung von hochmolekularen, gegebenenfalls verzweigten Polyarylensulfiden

Die Erfindung betrifft ein Verfahren zur Herstellung von hochmolekularem, gegebenenfalls verzweigten Polyarylensulfiden (PPS) aus Alkalisulfiden, gegebenenfalls im Gemisch mit Alkalihydrogensulfiden und Dihalogenaromaten in einem polaren Lösungsmittel, in Gegenwart von 0,1 bis 6,0 Mol-%, bevorzugt 0,25 bis 4,0 Mol-% einer aromatischen Monoalkoxy-bzw. Monoalkylthioverbindung. Die so erhaltenen Polyarylensulfide haben reproduzierbar einstellbare Schmelzviskositäten bzw. Molmassen und zeichnen sich durch eine geringere Korrosion aus.

Polyarylensulfide und ihre Herstellung sind bekannt, s. beispielsweise US-PS 25 13 188, 31 17 620 und 33 54 129.

So ist z. B. bekannt, daß die Zugabe von anorganischen oder organischen Salzen zum Umsetzungsgemisch zur Erniedrigung des Schmelzflusses bzw. zur Erhöhung der Schmelzviskosität der gewonnenen Polyphenylensulfide beiträgt. Erst bei ausreichend hoher Schmelzviskosität können Polyphenylensulfide thermoplastisch, z. B. zu Spritzgußteilen, Folien und Fasern verarbeitet werden, so daß eine separate und zusätzliche Nachkondensation bzw. Härtung (Curing) erforderlich sein kann.

Aus der DE-OS 31 20 538 ist bekannt, Polyarylensulfide mit hohen Schmelzviskositäten durch Zugabe von N,N-Dialkylcarbonsäureamiden zum Umsetzungsgemisch zu erhalten.

Die bekannten Verfahren besitzen jedoch den Nachteil, daß zur Einstellung definierter Molmassen p-Dichlorbenzol in entsprechendem Überschuß eingesetzt oder die Reaktion zu bestimmten Zeiten abgebrochen werden muß. Die so erhaltenen Polyphenylensulfide führen jedoch zu einer erhöhten Korrosion während der thermoplastischen Verarbeitung. Die so hergestellten Polymeren haben oftmals eine nicht ausreichenden Stabilität im geschmolzenen Zustand. Insbesondere wird durch einen hohen Anteil an Halogenendgruppen die elektrische Durchschlags-und Kriechstromfestigkeit des Polyarylensulfids und daraus hergestellter Formteile nachteilig beeinflußt. Außerdem läßt sich die gewünschte Schmelzviskosität nur schwer reproduzierbar einstellen.

Es wurde nun gefunden, daß durch Zugabe bestimmter aromatischer Monoalkoxy-bzw. Monoalkylthioverbindungen zum Reaktionsgemisch Polyarylensulfide erhalten wurden, die reproduzierbar einstellbare Schmelzviskositäten bzw. Molmassen besitzen und sich durch geringere Korrosion bei der Verarbeitung auszeichnen.

Gegenstand der Erfindung ist daher ein Verfahren zur Herstellung von gegebenenfalls verzweigten Polyarylensulfiden aus

a) 50 - 100 Mol-% Dihalogenaromaten der Formel (I)

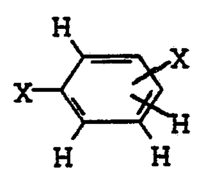

(I),

und 0 - 50 Mol-% Dihalogenaromaten der Formel (II)

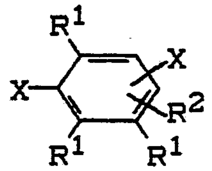

(II),

in denen

X für zueinander meta-oder para-ständiges Halogen wie Chlor oder Brom steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatome wie N, O und S enthaltenden Ring verknüpft sein können und immer ein Rest $R^1$ verschieden von Wasserstoff ist,

und

b) 0 - 5 Mol-%, bevorzugt 0,1 - 2,5 Mol-%, bezogen auf die Summe der Dihalogenaromaten der Formel I und II, eines Tri-oder Tetrahalogenaromaten der Formel

$ArX_n$ (III),

wobei

Ar ein aromatischer $C_6$-$C_{14}$-Rest oder ein heterocyclischer Rest mit 5 - 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht

und

c) 50 bis 100 Mol-% Alkalisulfid, bevorzugt Natrium-oder Kaliumsulfid oder deren Mischung, z. B. in Form ihrer Hydrate oder wäßrigen Mischungen, gegebenenfalls zusammen mit geringen Mengen Alkalihydroxiden wie Natrium-und Kaliumhydroxid, und 0 bis 50 Mol-% Alkalibisulfid, bevorzugt Natrium-und Kaliumhydrogensulfid, oder deren Mischung, wobei das molare Verhältnis von (a + b) : c im Bereich von 0,75 : 1 bis 1,25 : 1 liegen kann,

d) gegebenenfalls in Anwesenheit von Reaktionsbeschleunigern wie Alkalicarboxylaten, Alkaliphospha ten, Alkaliphosphonaten, Alkalifluoriden, Alkalialkylsulfonaten, gegebenenfalls in Anwesenheit von N,N-Dialkylcarbonsäureamiden, Lactamen, Aminosäuren, Anhydriden und Estern von Carbonsäuren, dadurch gekennzeichnet, daß dem Reaktionsgemisch aromatische (Thio)Ether der Formel (IV)

A-X-R (IV),

X für O und S steht

in welcher

A ein aromatischer oder heterocyclischer Rest mit 6-24 C-Atomen ist, wobei gegebenenfalls bis zu drei C-Atome durch Heteroatome wie N, O, S ersetzt sein können wie

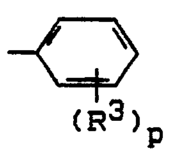
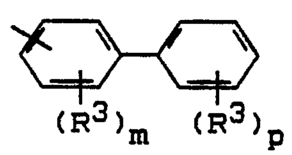
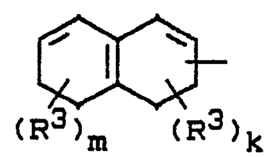
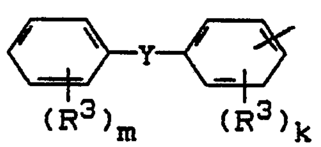
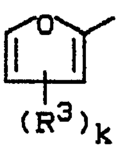
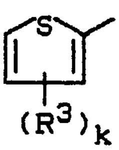
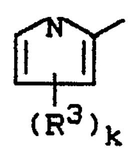

worin die Reste

$R^3$ unabhängig voneinander $C_{1-18}$-Alkyl, $C_{7-19}$-Alkylaryl/Aralkyl, $C_{5-6}$-Cycloalkyl sind,

Y $C_1$-$C_6$-Alkyliden, $C_{3-6}$-Cycloalkyliden, CO, -S-, -SO-, $-SO_2$, $NR^3$, O oder eine einfache Bindung steht (worin $R^3$ die o. g. Bedeutung hat)

k für die Zahl 0, 1, 2, 3,
m für die Zahl 0, 1, 2, 3, 4,
p für die Zahl 0, 1, 2, 3, 4, 5 steht und

R für $C_{1-18}$-Alkyl, $C_{7-19}$-Aralkyl

in Mengen von 0,1 - 6 Mol-%, vorzugsweise 0,25 - 4,0 Mol-% zugegeben werden.

Das erfindungsgemäße Verfahren kann in verschiedener Weise durchgeführt werden:

Die Alkalisulfide werden vorzugsweis°e in Form ihrer Hydrate und wäßrigen Mischungen oder wäßrigen Lösungen eingesetzt. Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt und die Entwässerung des Gesamtgemisches durchgeführt werden. Das Alkalisulfid kann auch separat mit einem Teil der Reaktionskomponenten oder alleine entwässert werden.

Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern erfolgen, wobei als Azeotropbildner bevorzugt die Dihalogenaromaten genutzt werden. Für die Entwässe rung können alle Reaktionspartner gemischt und die Entwässerung des Gesamtgemisches durchgeführt werden. Das Alkalisulfid kann auch separat mit einem Teil der Reaktionskomponenten oder alleine entwässert werden.

Die Zugabe der Monoalkoxy-bzw. Monoalkylthioaromaten der Formel IV kann vor oder während der Reaktion erfolgen. Dabei können auch Gemische der Monoalkoxy-bzw. Monoalkylthioaromaten eingesetzt werden. Die Zugabe kann durch Dosierung über einen gewissen Zeitraum der Reaktion (z. B. innerhalb 0,5 - 2 Stunden), portionsweise zu bestimmten Zeiten des Reaktionsablaufes oder durch Zugabe der berechneten Gesamtmenge zu einem definierten Zeitpunkt der Umsetzung erfolgen.

In einer bevorzugten Ausführungsform der Umsetzung werden die Reaktionspartner zusammen mit dem Reaktionsbeschleuniger bzw. einem Gemisch von Reaktionsbeschleunigern gemeinsam mit den Monoalkoxy-bzw. Monoalkylthioaromaten der Formel IV in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden.

Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di-und Polyhalogenaromat hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden. Sie kann 1 - 48 Stunden, bevorzugt 1 - 18 Stunden, betragen. Die Reaktionstemperaturen liegen zwischen 150 und 300°C, vorzugsweise zwischen 170 und 280°C.

Die Reaktion kann gegebenenfalls zusätzlich in Anwesenheit von üblichen Reaktionsbeschleunigern wie z. B. Alkalicarboxylaten (DE-OS 24 53 749), Lithiumhalogeniden oder Alkalicarboxylaten (DE-OS 26 23 362), Lithiumchlorid oder Lithiumcarboxylat (DE-OS 26 23 363), Alkalicarbonaten in Kombination mit Alkalicarboxylaten (US-PS 40 38 259), Lithiumacetat (DE-OS 26 23 333), Trialkaliphosphaten (DE-OS 29 30 710), Trialkaliphosphonaten (DE-OS 29 30 797), Alkalifluoriden (DE-OS 30 19 732), Alkalisulfonaten (US-PS 40 38 260), Lithiumcarbonat und Lithiumborat (US-PS 40 10 518), Aminosäuren (DE-OS 34 32 985), Anhydriden und Estern von Carbonsäuren (DE-OS 34 32 986) und N,N-Dialkylcarbonsäureamiden durchgeführt werden.

Um thermoplastisch verarbeitbare Polyphenylensulfide zu erhalten, werden bevorzugt p-Dihalogenaromaten eingesetzt.

Sollen verzweigte Polyarylensulfide hergestellt werden, sollten mindestens 0,05 Mol-% eines Tri-oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlorotoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,6-Tetramethyl-3,6-dichlorbenzol, 1-Cyclohexyl-2,5-dichlorbenzol, 1-Phenyl-2,5-dichlorbenzol,1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri-bzw. Tetrahalogenaromaten der Formel (III) sind:

1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalon, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3 - 11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Die erfindungsgemäß einsetzbaren Alkylarylether bzw. -thioether der Formel (IV) haben keine weitere, unter den Umsetzungsbedingungen reaktive Gruppe und sind halogenfrei. Z. B. konnen verwendet werden:

Methoxybenzol, Ethoxybenzol, Propoxybenzol, 2-Methyl-methoxy-benzol, 3-Methyl-methoxybenzol, 4-Methyl-methoxybenzol, 2-Ethyl-methoxybenzol, 3-Ethyl-methoxybenzol, 4-Ethyl-methoxybenzol, 2-Propyl-methoxybenzol, 3-Propyl-methoxybenzol, 4-Propyl-methoxybenzol, 2-Isopropylmethoxybenzol, 3-Isopropyl-methoxybenzol, 4-Isopropyl-methoxybenzol, 2-Pentyl-methoxybenzol, 3-Pentyl-methoxybenzol, 4-Pentyl-methoxybenzol, 2-Isopentyl-methoxybenzol, 2-tert.-Pentyl-methoxybenzol, 3-tert.-Pentyl-methoxybenzol, 4-tert.-Pentyl-methoxybenzol, 2-tert.-Butyl-methoxybenzol, 3-tert.-Butyl-methoxybenzol, 4-tert.-Butyl-methoxybenzol, 2-Butyl-methoxybenzol, Phenyl-benzylether, Phenyl-benzylsulfid, 3-Butylmethoxybenzol, 4-Butyl-methoxybenzol, 2-sec-Butyl-methoxybenzol, 2-Cyclopentyl-methoxybenzol, 3-Cyclopentylmethoxybenzol, 4-Cyclopentyl-methoxybenzol, 2-Cyclohexyl-methoxybenzol, 3-Cyclohexyl-methoxybenzol, 4-Cyclohexylmethoxybenzol, 2-Cyclohexyl-4-methylmethoxybenzol, 2-tert.-Butyl-4-methyl-methoxybenzol, 2,3-Dimethyl-methoxybenzol, 3,4-Dimethyl-methoxybenzol, 2,4-Dimethyl-methoxybenzol, 3,5-Dimethyl-methoxybenzol, 2,5-Dimethyl-methoxybenzol, 3-Ethyl-5-methyl-methoxybenzol, 2,3,5-Trimethylmethoxybenzol, 3-Methyl-4-(1-methylethyl)methoxybenzol, 5-Methyl-2-(1-methylethyl)-methoxybenzol, 4-Isooctylmethoxybenzol, 2-Nonyl-methoxybenzol, 3-Nonylmethoxybenzol, 4-Nonyl-methoxybenzol, 2,4-Di-tert.-butyl-methoxybenzol, 2-Dodecyl-methoxybenzol, 3-Dodecyl-methoxybenzol, 4-Dodecylmethoxybenzol, 1-Methoxy-5,6,7,8-Tetrahydronaphthalin, 1,1,3,3-Tetramethyl-5-methoxyindan, 1-Methoxy naphthalin, 2-Methoxynaphthalin, 2-Methoxybiphenyl, 3-Methoxybiphenyl, 4-Methoxybiphenyl, 2-Methoxy-diphenylmethan, 4-Methoxy-diphenylmethan, 4-(1-Methoxydiphenylether, 4-Methoxydiphenylsulfon, 4-Methoxydiphenylsulfid, Methyl-phenylsulfid, Ethyl-phenylsulfid, Methyl-(4-Methylphenyl)sulfid, Methyl-(2-Methylphenyl)sulfid, Methyl-(3-methylphenyl)sulfid, 2-(Methylthio)-naphthalin, 1-(Methylthio)-naphthalin, 2-(Methylthio)-diphenylsulfid, 4-(Methylthio)-diphenylsulfid.

Bevorzugte sind Methoxybenzol, 4-Methyl-methoxybenzol, 4-Ethyl-methoxybenzol, 4-t-Butyl-methoxybenzol, 4-Cyclohexyl-methoxybenzol, 4-Isooctyl-methoxybenzol, 4-Nonyl-methoxybenzol, 4-Dodecyl-methoxybenzol, 1-Methoxynaphthalin, 2-Methoxynaphthalin, Methyl-phenylsulfid, Methyl-(4-methylphenyl)-sulfid, 1-(Methylthio)-naphthalin, 2-Methylthionaphthalin.

Besonders bevorzugt sind Methoxybenzol, 4-Methyl-methoxy benzol, 4-Isooctyl-methoxybenzol, 4-Nonyl-methoxybenzol, 2-Methoxynaphthalin, Methyl-phenylsulfid, Methyl-(4-methylphenyl)-sulfid.

Es können Gemische der Monoalkoxyaromaten bzw. Mono(alkylthio)aromaten der Formel (IV) verwendet werden.

Die Aufarbeitung des Umsetzungsgemisches und die Isolierung der Polyphenylensulfide können in bekannter Weise erfolgen.

Das Polyarylensulfid kann direkt aus der Reaktionslösung oder erst z. B. nach Zugabe von Wasser und/oder verdünn ten Säuren oder organischen Lösungsmitteln mit geringer Löslichkeit für Polyarylsulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist ebenfalls möglich.

Das Polyarylensulfid kann auch beispielsweise durch Abdestillieren des Lösungsmittels und eine anschließende Wäsche, wie oben beschrieben, gewonnen werden.

Die erfindungsgemäß hergestellten Polyarylensulfide zeichnen sich durch definierte Schmelzviskositäten, abhängig vom Kettenabbrechergehalt aus, die reproduziert werden können. Das ist insofern von Bedeutung, als zur Verarbeitung der Polyarylensulfide Polymerschmelzen mit unterschiedlichem Fließverhalten eingestellt werden müssen, die dem jeweiligen Verwendungszweck angepaßt sein müssen.

So können zur Herstellung von Folien und Fasern höhere Schmelzviskositäten als zur Einstellung von Glasfaser-bzw. Glasfaser-/Mineral-verstärkten Spritzgußteilen vorteilhaft sein.

Ein weiterer Vorteil der erfindungsgemäß hergestellten Polyarylensulfide ist die größere Stabilität bei thermischer Belastung.

Nur so ist gewährleistet, daß kein weiterer Auf-oder Abbau bei der thermoplastischen Verarbeitung, der zur vollständigen Veränderung des Eigenschaftsbildes führen kann, eintritt und Regenerat nach der Verarbeitung wieder neu eingesetzt werden kann.

Darüber hinaus ist die bei der thermoplastischen Verarbeitung oder bei Kontakt von PPS-Schmelzen mit Metalloberflächen im allgemeinen auftretende Korrosion, die zu Verunreinigungen des PPS und zum Verschleiß von Herstellung-und Verarbeitungsmaschinen führt, bei den erfindungsgemäßen Polyphenylensulfiden auch bei hoher thermischer Belastung stark reduziert.

Die erfindungsgemäßen Polyarylensulfide können mit anderen Polymeren sowie mit Pigmenten und Füllstoffen - Graphit, Metallpulver, Glaspulver, Quarzmehl, Glasfasern oder Kohlefasern - gemischt oder mit den für Polyarylensulfiden üblichen Additiven, beispielsweise üblichen Stabilisatoren und Entformungsmitteln versetzt werden.

Die erfindungsgemäßen Polyarylensulfide besitzen nach der Isolierung aus dem Reaktionsgemisch Schmelzviskositäten zwischen 1 bis $5 \times 10^3$, vorzugsweise 5 bis $10^3$ Pa.s. Sie können in der üblichen Weise verarbeitet werden. Erhalten werden dabei Folien, Fasern und vorzugsweise Spritzgußmassen. Diese können Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc.

Schmelzviskosität

Die Schmelzviskosität $\eta_m$ der Polymerschmelze (in Pa.s) wurde bei 306°C in Abhängigkeit von der Schubspannung (in Pa) mit Hilfe eines Rheometers Modell 3250 der Firma Instron gemessen. Die angegebenen Schmelzviskositäten wurden bei einer Schubspannng von $\lambda = 10^2$ Pa gemessen.

Korrosion

Die Korrosion wurde durch Titration saurer Ausgasungen der entsprechenden Polyphenylensulfidproben im Luftstrom bei 350°C in 1 h bestimmt. Der Korrosionsfaktor $f_{Korr.}$ist gegeben durch

$$f_{Korr.} = \frac{\text{Korrosionswert des entsprechenden Beispiels}}{\text{Korrosionswert des Vergleichsbeispiels 1}}$$

Beispiel 1

In einem mit Rührwerk und Destillationsaufsatz ausgerüsteten 6 l-Kessel wurden 2.675 g N-Methylcaprolactam, 1.209 g p-Dichlorbenzol sowie 30,5 g (3 Mol-%) p-Methylanisol vorgelegt und auf 220°C erhitzt. Hierzu wird eine heiße Mischung aus 1.156 g Natriumsulfid-Trihydrat (ca. 60-%ig), 133 g Caprolactam, 325 g Wasser und 4 g 45-%iger NaOH innerhalb von 3 h derart zudosiert, daß eine Innentemperatur von 215°C aufrechterhalten werden kann. Bei der Dosierung wird gleichzeitig das Wasser aus der Reaktion entfernt.

Anschließend hält man die Reaktion weiter 9 h auf Rückfluß. Das Polyphenylensulfid wird nun in Wasser ausgefällt, elektrolytfrei gewaschen und mit einem organischen Lösungsmittel kurz extrahiert.

Das getrocknete p-Polyphenylsulfid besitzt eine Schmelzviskosität von 7,3 Pa.s und einen Korrosionsfaktor von $f_{Korr.} = 0,88$.

Beispiel 2-7

Die Versuchsdurchführung erfolgt analog zum Beispiel 1. In der nachfolgenden Tabelle sind die verwendeten Additive sowie die Eigenschaften der erhaltenen Polyphenylensulfide aufgeführt.

| Bsp. | Additiv | Menge/Mol-% | $\eta_m$(Pa.s) | $f_{Korr.}$ |
|---|---|---|---|---|
| 2 | p-Methylanisol | 1 | 28 | 0,71 |
| 3 | " | 0,5 | 155 | 0,84 |
| 4 | 2-Methoxynaphthalin | 0,75 | 60 | 0,79 |
| 5 | Thioanisol | 0,75 | 33 | 0,85 |
| 6 | Anisol | 0,5 | 145 | 0,88 |
| 7a | " | 1 | 30 | 0,68 |
| 7b | " | 1 | 32,5 | 0,78 |
| 7c | " | 1 | 31,5 | 0,72 |

Vergleichsbeispiel 1 a-c

Wie Beispiel 1, jedoch werden anstelle von p-Methoxyanisol weitere 24 g (2 Mol-%) p-Dichlorbenzol vorgelegt. Dieser Versuch wird zweimal wiederholt. Die nachfolgende Tabelle gibt die Eigenschaften der erhaltenen Polyphenylensulfide wieder.

| | $\eta_m$ (Pa.s) | $f_{Korr.}$ |
|---|---|---|
| 1 a | 81 | 1 |
| 1 b | 65 | 1 |
| 1 c | 200 | 1,02 |

**Ansprüche**

1. Verfahren zur Herstellung von gegebenenfalls verzweigten Polyarylensulfiden aus
a) 50 - 100 Mol-% Dihalogenaromaten der Formel (I)

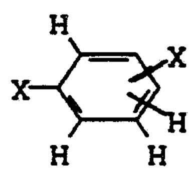
(I),

und 0 - 50 Mol-% Dihalogenaromaten der Formel (II)

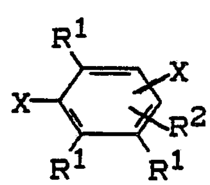
(II),

in denen

X für zueinander m-oder p-ständiges Halogen wie Chlor oder Brom steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri-oder Tetrahalogenaromaten der Formel (III)

$ArX_n$ (III),

wobei

Ar ein aromatischer $C_6$-$C_{14}$-Rest oder ein heterocyclischer Rest mit 5 - 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht

und

c) 50 bis 100 Mol-% Alkalisulfid, bevorzugt Natrium-oder Kaliumsulfid oder deren Mischung, z. B. in Form ihrer Hydrate oder wäßrigen Mischungen, gegebenenfalls zusammen mit geringen Mengen Alkalihydroxiden wie Natrium-und Kaliumhydroxid, und 0 bis 50 Mol-% Alkalibisulfid, bevorzugt Natrium-und Kaliumhydrogensulfid, oder deren Mischung, wobei das molare Verhältnis von (a + b) : c im Bereich von 0,75 : 1 bis 1,25 : 1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten, gegebenenfalls in Anwesenheit von N,N-Dialkylcarbonsäureamiden, Lactamen, Aminosäuren, Anhydriden und Estern von Carbonsäuren, dadurch gekennzeichnet, daß dem Reaktionsgemisch (Thio)Etheraromaten der Formel (IV)

A-X-R (IV),

X für O und S steht

A ein aromatischer oder heterocyclischer Rest, mit 6-24 C-Atomen und bis zu drei C-Atome durch Heteroatome wie N, O, S ersetzt sein können wie

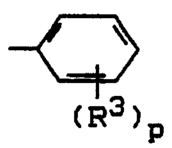 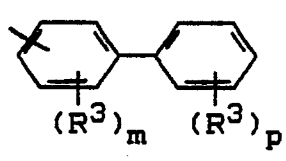 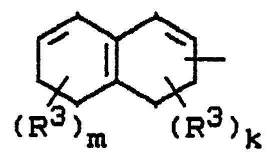

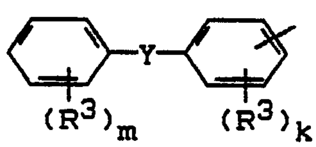 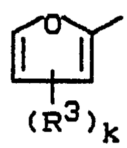 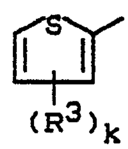 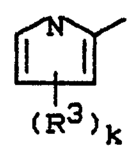

worin die Rest

$R^3$ unabhängig voneinander $C_{1-18}$-Alkyl, $C_{7-19}$-Alkylaryl/Aralkyl, $C_{3-6}$-Cycloalkyl sind,

Y $C_{1-6}$-Alkyliden, $C_{3-6}$-Cycloalkyliden, CO, -S-, -SO-, $-SO_2$, $NR^3$, O oder eine einfache Bindung bedeutet (worin $R^3$ die o. g. Bedeutung hat)

k für die Zahl 0, 1, 2, 3,
m für die Zahl 0, 1, 2, 3, 4,
p für die Zahl 0, 1, 2, 3, 4, 5 steht und
R für $C_{1-18}$-Alkyl, $C_{7-19}$-Aralkyl steht,

in Mengen von 0,1 - 6 Mol-%, vorzugsweise 0,25 -4,0 Mol-% zugegeben werden.

2. Verfahren nach Anspruch 1, dadurch gekennzeichnet, daß die Umsetzung in Abwesenheit von Wasser durchgeführt wird.

3. Verfahren nach Anspruch 1, dadurch gekennzeichnet, daß man N-Methylpyrrolidon und/oder N-Methylcaprolactam als polares Lösungsmittel verwendet.